Europäisches Patentamt

(19) European Patent Office

Office européen des brevets

(11) Numéro de publication: **0 197 599**
A1

(12) **DEMANDE DE BREVET EUROPEEN**

(21) Numéro de dépôt: 86200540.2

(22) Date de dépôt: 01.04.86

(51) Int. Cl.⁴: **A 61 C 1/18**

---

(30) Priorité: 11.04.85 FR 8506076

(43) Date de publication de la demande:
15.10.86 Bulletin 86/42

(84) Etats contractants désignés:
AT DE FR SE

(71) Demandeur: MICRO-MEGA S.A.
5-12, rue du Tunnel
F-25006 Besancon(FR)

(72) Inventeur: Boinot, Jean-Claude
Chaudefontaine
F-25640 Roulans(FR)

(74) Mandataire: Jörchel, Dietrich R.A. et al,
c/o BUGNION S.A. 10, route de Florissant Case postale
375
CH-1211 Genève 12 Champel(CH)

---

(54) Pièce à main dentaire à contre-angle.

(57) Pièce à main dentaire à contre-angle composée d'un
corps antérieur (2) emboîté à frottement dur dans un corps
postérieur (1).
Le dispositif de fixation entre les deux pièces est
constitué par une clavette (8) en forme de segment de cercle
qui traverse des fentes ménagées dans le corps antérieur (2),
dans le corps postérieur (1) et dans le fourreau interne (6) qui
supporte l'arbre d'entraînement (3). Une bague (12), en
forme de capuchon, qui s'ajuste sur le corps antérieur et sur
le corps postérieur verrouille la clavette (8).
L'invention s'applique à n'importe quelle pièce à main
dentaire.

Fig.1

EP 0 197 599 A1

*1*

## Pièce à main dentaire à contre-angle.

La présente invention se rapporte à une pièce à main dentaire à contre-angle composée d'un corps antérieur emboîté à frottement dur avec un corps postérieur, le corps antérieur comprenant la tête du contre-angle dans laquelle se fixe l'outil et contenant un fourreau interne qui supporte l'arbre d'entraînement de l'outil et les coussinets de celui-ci, un dispositif de fixation étant prévu pour fixer le corps antérieur au corps postérieur, ce dispositif comprenant un organe de fixation et une bague de verrouillage.

Jusqu'à maintenant, le corps antérieur de la pièce à main était généralement fixé sur le corps postérieur au moyen d'un circlips monté entre une rainure périphérique formée sur la face extérieure du corps antérieur et une rainure périphérique formée sur la face intérieure du corps postérieur, une goupille fixée dans le corps antérieur et s'insérant dans une fente du corps postérieur assurant le positionnement des pièces. Ce dispositif est tout à fait valable et a fait ses preuves pour les pièces à main à contre-angle dont la partie antérieure doit pouvoir être facilement démontée

2

et remontée par le dentiste en vue du changement de  la tête du contre-angle.

On connaît également d'autres dispositifs pour la fixation du corps antérieur  du contre-angle dans le  corps postérieur,  notamment, selon le brevet DE 599 591, une bille traverse un  orifice  du  corps  postérieur  pour s'introduire  dans  une gorge du corps antérieur. Cette bille est mise en place et retenue  par  une  bague  de verrouillage  présentant un cône et qui se visse sur le corps postérieur. Ce dispositif qui peut  être  facilement démonté  par  le  dentiste  demande  en  outre  un ajustage très précis pour que la tête ne bouge pas.

Or, toutes les pièces à main ne doivent pas être nécessairement démontables par le dentiste , mais  seulement par le réparateur en cas de panne ou de révision, c'est pourquoi il est inutile d'équiper  certains  types  de pièces à main d'un système facilement démontable.

La  présente  invention  se propose de créer un système qui  assure  un  verrouillage  parfait  entre  les différentes  pièces  et  qui  ne peut être démonté qu'à l'aide d'un outil spécial.

A  cet  effet,  la  pièce  à main selon l'invention est caractérisée par le fait que ledit organe  de  fixation est  constitué  par une clavette en forme de segment de cercle qui traverse des fentes ménagées dans  le  corps antérieur,  le corps postérieur et le fourreau interne, ladite clavette s'appuyant contre  le  fond  des  dites fentes,  et que la bague de verrouillage forme capuchon et est ajustée à frottement dur sur le corps  antérieur et  le  corps  postérieur  et est munie à sa périphérie extérieure d'une rainure formant prise pour un outil de démontage.

On obtient ainsi simultanément un verrouillage du corps antérieur sur le corps postérieur et du fourreau porteur le l'arbre dans le corps antérieur, les pièces ne pouvant être démontées qu'au moyen d'un outil spécial, par un spécialiste.

L'invention sera décrite dans la description qui suit d'une forme d'éxécution de la pièce à main et au moyen du dessin annexé dans lequel :

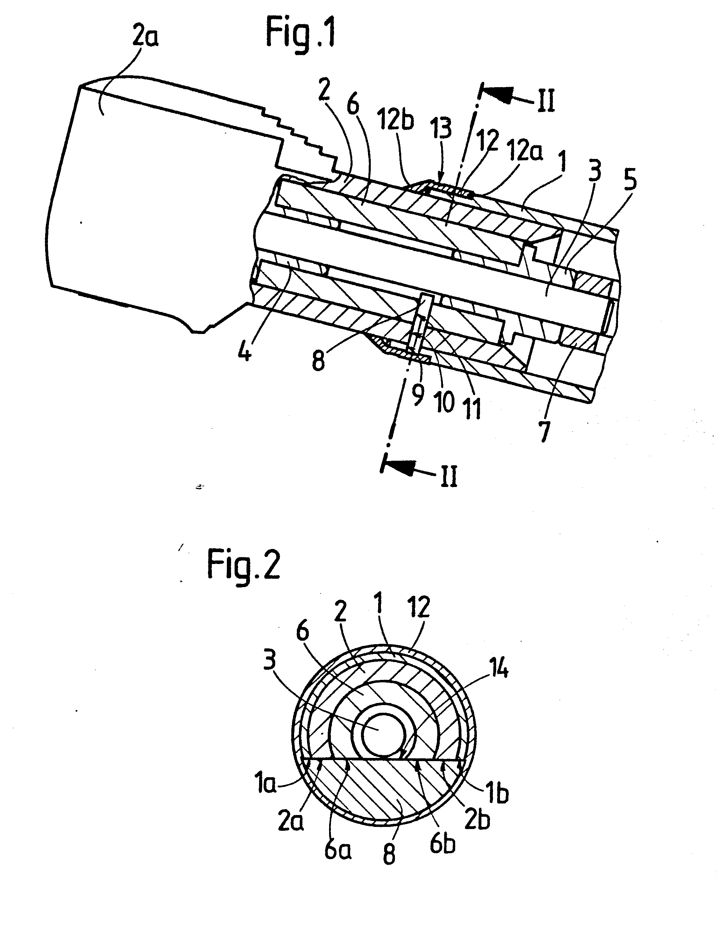

La figure 1 est une vue en coupe longitudinale partielle de la partie antérieure de la pièce à main,

La figure 2 est une vue en coupe selon l'axe II-II de la figure 1.

La pièce à main, en forme de contre-angle, est composée de manière connue d'un corps postérieur ou manche 1 et d'un corps antérieur 2 comportant la tête 2a dans laquelle se fixe l'outil, non représenté. Celui-ci est entraîné d'une manière connue par un arbre rotatif 3 supporté par des coussinets 4, 5 eux-mêmes supportés par un fourreau 6 ajusté à frottement gras dans le corps antérieur 2. Sur l'extrémité postérieure de l'arbre 3 est monté un pignon 7 prévu pour être entraîné par un autre pignon monté à l'extrémité antérieure d'un deuxième arbre monté dans le corps postérieur et non représenté. Ce deuxième arbre peut, par exemple, être entraîné par un micromoteur logé dans un embout qui se fixe à l'extrémité du corps postérieur 1.

Le corps antérieur 2 est emboîté à frottement dur dans le corps postérieur 1 et en est rendu solidaire par une clavette 8 en forme de segment de cercle qui traverse des fentes 9, 10, 11 ménagées respectivement dans le corps postérieur 1, dans le corps antérieur 2 et dans le fourreau interne 6. La face plane 14 de cette clavette , dont le diamètre correspond au diamètre extérieur du corps postérieur, s'appuie contre le fond de ces rainures, soit contre les faces 1a, 1b de la rainure 9 ménagée dans le corps postérieur 1, les faces 2a, 2b de la rainure 10 ménagée dans le corps antérieur 2 et les faces 6a, 6b de la rainure 11 ménagée dans le fourreau interne 6. Cette clavette 8 verrouille donc en même temps le corps antérieur 2 sur le corps postérieur 1 et le fourreau interne 6 dans le corps postérieur 1.

La clavette 8 est verrouillée à l'extérieur par une bague 12 en forme de capuchon dont la partie postérieure 12a, plus large, est ajustée à frottement dur sur le corps postérieur 1, tandis que l'extrémité antérieure réduite 12b est ajustée à frottement dur sur le corps antérieur 2. La bague 12 est munie sur sa face extérieure d'une rainure annulaire 13 formant prise pour un outil de démontage par exemple deux coquilles que l'on engage dans cette rainure pour avoir une prise pour tirer cette bague 12 du côté de la tête 2a. Ce démontage n'est, en général, pratiqué que par le réparateur.

Ce dispositif de fixation à clavette peut bien entendu être appliqué à n'importe quelle sorte de pièce à main dentaire qui ne doit pas être facilement démontable par le dentiste.

**0197599**

REVENDICATION.

1.   Pièce à main dentaire à contre-angle composée d'un corps antérieur emboîté à frottement dur avec un corps postérieur, le corps antérieur comprenant la tête du contre-angle dans laquelle se fixe l'outil et contenant un fourreau interne qui supporte l'arbre d'entraînement de l'outil et les coussinets de celui-ci, un dispositif de fixation étant prévu pour fixer le corps antérieur au corps postérieur, ce dispositif comprenant un organe de fixation et une bague de verrouillage, caractérisée par le fait que ledit organe de fixation est constitué par une clavette (8) en forme de segment de cercle qui traverse des fentes (9, 10, 11) ménagées dans le corps antérieur (2), le corps postérieur (1) et le fourreau interne (6), ladite clavette s'appuyant contre le fond des dites fentes, et que la bague de verrouillage (12) forme capuchon et est ajustée à frottement dur sur le corps antérieur et le corps postérieur et est munie à sa périphérie extérieure d'une rainure (13) formant prise pour un outil de démontage.

0197599

**Fig.1**

**Fig.2**

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int Cl 4) |
| A | DE-C- 599 591 (KALTENBACH & VOIGT) * Description; figures * | 1 | A 61 C    1/18 |
| A | US-A-4 183 691 (L. VAN MELLE) * Résumé; figures * | 1 | |
| | | | **DOMAINES TECHNIQUES RECHERCHES (Int Cl.4)** |
| | | | A 61 C |

Le présent rapport de recherche a été établi pour toutes les revendications

| Lieu de la recherche | Date d'achèvement de la recherche | Examinateur |
|---|---|---|
| LA HAYE | 04-07-1986 | VANRUNXT J.M.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82